Europäisches Patentamt

European Patent Office

Office européen des brevets

(19)

(11) Publication number: **0 454 103 A1**

# EUROPEAN PATENT APPLICATION

(21) Application number: **91106625.6**

(22) Date of filing: **24.04.91**

(51) Int. Cl.5: **F16L 9/14, F16L 58/10, F16L 55/165, B32B 1/08, B29C 67/00**

(30) Priority: **27.04.90 JP 110465/90**

(43) Date of publication of application:
**30.10.91 Bulletin 91/44**

(84) Designated Contracting States:
**DE FR GB**

(71) Applicant: **NKK CORPORATION**
**1-2 Marunouchi 1-chome, Chiyoda-ku**
**Tokyo(JP)**

(72) Inventor: **Hagio, Akira, c/o Patent & License Dept.**
**NKK CORPORATION, 1-2, 1-chome, Marunouchi**
**Chiyoda-ku, Tokyo(JP)**
Inventor: **Ono, Yoshimi, c/o Patent & License Dept.**
**NKK CORPORATION, 1-2, 1-chome, Marunouchi**
**Chiyoda-ku, Tokyo(JP)**
Inventor: **Honma, Hiroshi, c/o Patent & License Dept.**
**NKK CORPORATION, 1-2, 1-chome, Marunouchi**
**Chiyoda-ku, Tokyo(JP)**

(74) Representative: **Sajda, Wolf E., Dipl.-Phys. et al**
**MEISSNER, BOLTE & PARTNER**
**Widenmayerstrasse 48 Postfach 86 06 24**
**W-8000 München 86(DE)**

(54) Method of manufacturing innerback tube available for reconditioning a pipeline.

(57) A method of manufacturing a triple or more layered innerback tube available for reconditioning a pipeline, where the tube is provided with internal and external web layers respectively being composed of extremely strong fibers and a non-woven felt layer which is inserted between these web layers. A double-layer tube (3) is internally provided with a web layer (1) composed of extremely strong fibers and externally with a non-woven felt layer (2). The double-layer tube (3) is then set in a weaving machine (5) capable of forming a cylindrical web (6) around the outer periphery of an inner bag tube. Finally, the innerback tube is manufactured by forming a woven-cloth tube (6) composed of extremely fibers around the outer periphery of the double-layer tube by the weaving machine (5).

FIG. 8

The present invention relates to a method of manufacturing an innerback tube available for reconditioning a pipeline.

In order to recondition those pipelines including a water-supply pipeline, a sewage pipeline, an oil-supply pipeline, or the like, there is such a method which initially lines an innerback tube impregnated with thermosetting resin around the inner periphery of a pipeline by a pressurized fluid, and then, fully curing the impregnated thermosetting resin to form a new tube around the inside of the pipeline.

The innerback tube available for the reconditioning work is formed by fusing or adhering airtight resinous film made from either polyvinyl chloride or polyurethane resin onto the external surface of a felt tube which is preliminarily impregnated with thermosetting resin.

Nevertheless, the innerback tube may potentially be torn up on the way of service. Concretely, if the tube were set to the inner surface of the used pipeline by inverting the front and back with pressurized fluid, then the felt impregnated with thermosetting resin may eventually be torn up by force of the fluid pressure.

To solve this problem, there is such a proposal to provide a triple-layer innerback tube which is initially prepared by means of two pieces of woven tubes composed of those extremely strong fibers like glass fiber, or carbon fiber, or metallic fiber, or the like, on the internal and external circumferential surfaces of the felt tube to complete the triple-layer innerback tube.

The triple-layer innerback tube are manufactured by executing those processes described below. First, a woven-cloth tube made of those extremely strong fibers mentioned above is preliminarily manufactured. Next, a double-layer tube externally consisting of a felt layer and internally consisting of a woven-cloth layer made of those extremely strong fibers is inserted into the initially manufactured the woven-cloth tube to make up the triple-layer innerback tube. Nevertheless, the above conventional art needs to insert the double-layer tube into the woven-cloth tube, the inserting operation costs much labor. In particular, the longer the length of tube is, the greater the volume of manual labor needed for the inserting work becomes, thus resulting in the increased production cost.

The invention has been achieved to fully solve the above technical problem. An object of the invention is to provide a novel method of easily manufacturing a triple or more layered innerback tube available for reconditioning a pipeline. To achieve the above object, the invention provides a novel method of manufacturing the innerback tube comprising those sequential steps including the following;

the first step process which forms a single-layer tube by weaving extremely strong fibers into cylindrical form;

the second step process which forms a felt layer on the external circumferential surface of the single-layer tube manufactured by executing the first step process to make up a double-layer tube; and

the third step process which initially sets the double-layer tube serving as an inner-bag tube in a weaving machine capable of forming a cylindrical web around the outer periphery of an inner-bag tube, and then forms a woven-cloth tube composing of those extremely strong fibers around the outer periphery of the double-layer tube by operating the weaving machine to make up a triple-layer tube.

The method embodied by the invention initially makes up a double-layer tube which internally consists of a woven cloth layer made of those extremely strong fibers and externally consists of a felt layer, and then sets the double-layer tube surving as an inner bag tube in a weaving machine capable of forming a cylindrical web around the outer periphery of an inner bag tube. Finally, a woven-cloth tube composed of those extremely strong fibers is formed around the outer periphery of the double-layer tube by the weaving machine. Thus, the invention provides a novel method of easily manufacturing a triple or more layered inner-back tube available for reconditioning a pipeline.

This invention can be more fully understood from the following detailed description when taken in conjunction with the accompanying drawings, in which:

Fig. 1 is a perspective view of a single-layer tube manufactured by executing the first step process of the method embodied by the invention;

Fig. 2 is an axial-directional sectional view of the single-layer tube shown in Fig. 1;

Fig. 3 is a perspective view of a double-layer tube manufactured by executing the second step process of the method embodied by the invention;

Fig. 4 is an axial-directional sectional view of the double-layer tube shown in Fig. 3;

Fig. 5 designates a state in which the double-layer tube is set in a weaving machine;

Fig. 6 is a perspective view of a triple-layer tube manufactured by executing the third step process embodied by the invention;

Fig. 7 is an axial-directional sectional view of the triple-layer tube shown in Fig. 6; and

Fig. 8 is an axial-directional sectional view of a quadruple-layer tube manufactured by executing the fourth step process of the method embodied by the invention.

Referring now to the accompanying drawings, the method of manufacturing an innerback tube according to an embodiment of the invention is described below.

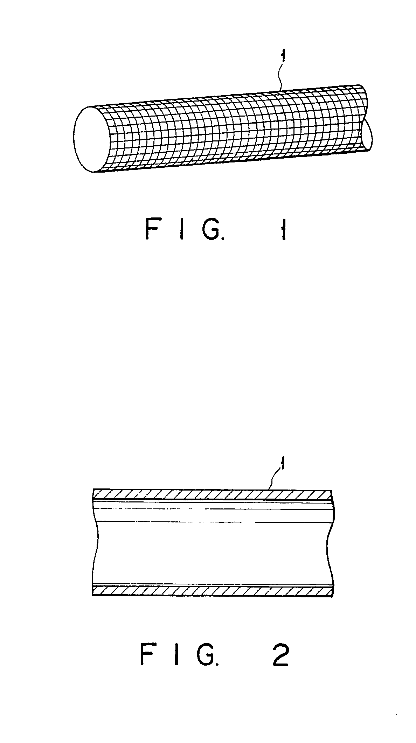

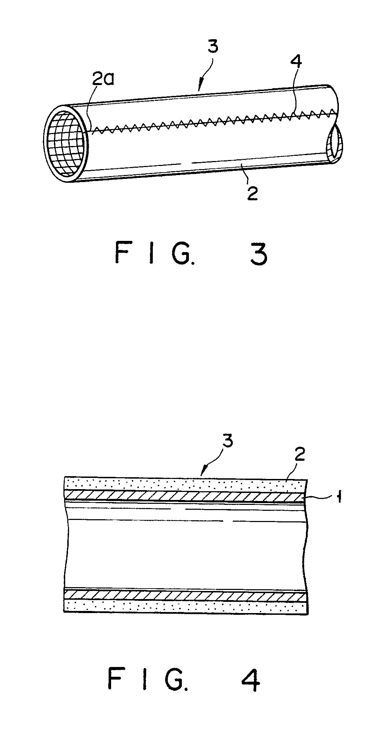

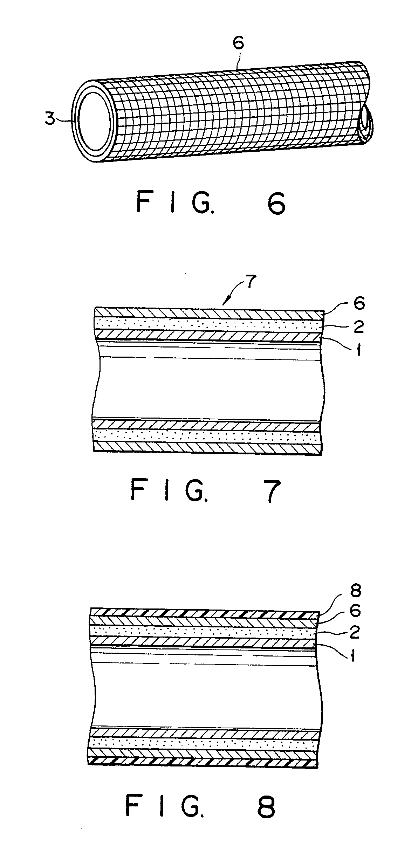

Figs. 1 through 8 respectively designate the method of manufacturing and the state of the inner-back tube embodied by the invention. First, refer to Figs. 1 and 2. The first step process of the method embodied by the invention manufactures a woven-cloth tube 1 which is composed of either glass fiber, or carbon fiber, or metallic fiber, or synthetic fiber, or extremely strong hybrid fibers made of the blend of those fibers cited above, by applying a circular-web weaving machine.

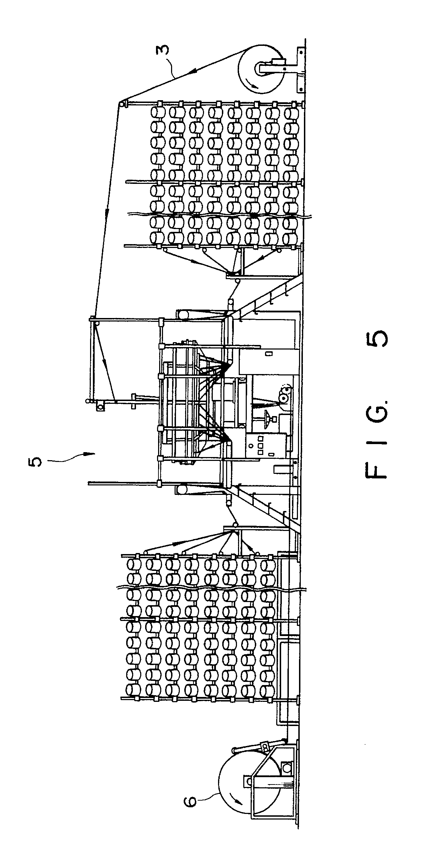

Next, refer to Fig. 3. The second step process winds a non-woven felt sheet 2 onto the external circumferential surface of the woven-cloth tube 1 according to the predetermined thickness. Thereby manufacturing a double-layer tube 3 shown in Fig. 4, which internally consists of a layer of a web made of those extremely strong fibers and externally a felt layer.

To securely prevent the non-woven felt sheet 2 from being stripped off from the woven tube 1, manufactures should be aware of the following; the non-woven felt sheet 2 should locally be adhered or fused to the external circumferential surface of the woven tube 1, and yet, the junction 2a of the non-woven felt sheet 2 should properly be sewn by a extremely strong fiber 4, or sealed with adhesive agent.

Desirably, the non-wove felt sheet 2 should be composed of those synthetic fibers like polyester fiber for example easily allowing impregnation of thermosetting resin like epoxy resin throughout the component fibers.

Next, shown in Fig. 5, the third step process is executed to set the double-layer tube 3 in a weaving machine 5 capable of forming a cylindrical web around the outer periphery of an inner bag tube, and then forms a woven-cloth tube 6 composing of those extremely strong fibers around the outer periphery of the double-layer tube 3, which is set as the inner bag tube, by the weaving machine 5. Thereby forming a triple-layer tube 7 shown in Fig. 7, which consists of woven cloth layers made of extremely strong fibers 1 and 6 which respectively envelope the inter mediate non-woven felt layer 2.

Fig. 8 presents a sectional view of a quadruple-layer tube which is superficially provided with an airtight resinous film 8 made from either polyvinyl chloride or polyurethane resin enveloping the external circumferential surface of the triple-layer tube 7 formed by executing the third step process of the method embodied by the invention mentioned above.

As is clear from the above description, to execute the method of manufacturing the innerback tube according to the scope of the invention, the double-layer tube 3 is initially manufactured by internally providing a woven layer of extremely strong fibers and externally providing a non-woven felt layer, and then the double-layer tube 3 is set in the weaving machine 5 to weave a woven tube 6 composed of extremely strong fibers around the outer periphery of the double-layer tube 3. As a result, the method embodied by the invention can securely manufacture the triple-layer tube 7 shown in Fig. 7. In other words, the method embodied by the invention can easily manufacture the triple or more layered inner-back tube independent of the above-cited conventional way of compulsorily inserting a double-layer tube into a woven tube composed of highly rigid fibers. In consequence, the method embodied by the invention totally eliminates labor and inconvenient insertion work thus far needed for executing the conventional practice.

It should be understood that the scope of the invention is by no means solely confined to the above embodiment, but a wide variety of modifications may also be materialized without deviating from the scope of the invention.

## Claims

1. A method of manufacturing an innerback tube available for reconditioning a pipeline, wherein said method is characterized by including the steps of:

the first step process which forms a single-layer tube (1) by weaving extremely strong fibers into cylindrical form;

the second step process which forms a double-layer tube (3) by forming a non-woven felt layer (2) on the external circumferential surface of said single-layer tube (1) yielded by execution of said first step process; and

the third step process which forms a triple-layer tube (7) by forming a woven cloth layer composed of extremely strong fibers around the outer periphery of said double layer tube (3) yielded by execution of said second step process; wherein said third step process is characterized by the formation of a triple-layer tube (7) by initially setting said double-layer tube (3) in a weaving machine (5) capable of forming a cylindrical web around the outer periphery of an inner bag, and forming around on the outer periphery of said double-layer tube (3) by operating said weaving machine (5).

2. A method of manufacturing an innerback tube available for reconditioning a pipeline according to claim 1, characterized in that said single-layer tube yielded by execution of said first step process is formed by weaving extremely strong fibers into cylindrical form by operating a weaving machine.

3. A method of manufacturing an innerback tube available for reconditioning a pipeline according to claim 1, characterized in that said non-woven felt layer is formed by winding a non-woven felt sheet onto the external circumferential surface of said single-layer tube yielded by execution of said first step process.

4. A method of manufacturing an innerback tube available for reconditioning a pipeline according to claim 1, characterized in that said non-woven felt layer is composed of fibers easily allowing impregnation of resin into fibers themselves.

5. A method of manufacturing an innerback tube available for reconditioning a pipeline according to claim 1, characterized in that an airtight layer is formed on the external circumferential surface of said triple-layer tube yielded by execution of said third step process.

F I G. 1

F I G. 2

F I G. 3

F I G. 4

F I G. 5

EP 0 454 103 A1

F I G. 6

F I G. 7

F I G. 8

European Patent
Office

# EUROPEAN SEARCH REPORT

Application Number

## DOCUMENTS CONSIDERED TO BE RELEVANT

EP 91106625.6

| Category | Citation of document with indication, where appropriate, of relevant passages | Relevant to claim | CLASSIFICATION OF THE APPLICATION (Int. Cl.5) |
|---|---|---|---|
| A | US - A - 4 681 783 (HYODO) * Totality * | 1,2 | F 16 L 9/14 F 16 L 58/10 F 16 L 55/165 B 32 B 1/08 B 29 C 67/00 |
| A | DE - C1 - 3 819 657 (SAERBECK-TEXTIL WAGENER KG) * Totality * | 1,2 | |
| A | DE - A1 - 2 645 361 (IMPERIAL METAL INDUSTRIES LTD) | | |

TECHNICAL FIELDS SEARCHED (Int. Cl.5)

F 16 L 9/00
F 16 L 55/00
F 16 L 58/00
B 32 B 1/00
B 29 C 67/00

The present search report has been drawn up for all claims

| Place of search | Date of completion of the search | Examiner |
|---|---|---|
| VIENNA | 04-07-1991 | SCHUGANICH |

EPO FORM 1503 03.82 (P0401)